# FASCICULE DE BREVET EUROPEEN

(11) **EP 2 568 217 B1**
(45) Date de publication et mention de la délivrance du brevet: **24.10.2018**
(21) Numéro de dépôt: 12183591.2
(22) Date de dépôt: 07.09.2012
(51) Int. Cl.: B23K 3/02, F23Q 3/01, F23D 14/58, F23D 99/00, F23D 14/38, A01K 17/00, F23D 14/46

(54) **Lance pour outil à main chauffant sans remontées de température le long de la tuyère**
Strahlrohr für Handwerkzeug, das sich ohne Temperaturdispersion entlang des Rohrs aufheizt
Head for a heating hand tool with no temperature increase along the nozzle

(30) Priorité: 09.09.2011 FR 1158019
(43) Date de publication de la demande: 13.03.2013
(73) Titulaire: Guilbert Express, 94120 Fontenay sous Bois (FR)
(72) Inventeur: Guillou, Yves, 77500 Chelles (FR); Armand, Yves, 91100 Corbeil Essonnes (FR); Le Drappier, Christophe, 93500 Pantin (FR)
(74) Mandataire: Regimbeau

(56) Documents cités:
- WO-A1-93/12377
- WO-A2-97/38265
- WO-A2-2010/059630
- FR-A1- 2 628 291
- US-A- 4 966 128

## Description

### Domaine de l'invention

L'invention concerne le domaine des outils à main chauffant. En particulier, l'invention concerne le domaine des outils à main chauffant comprenant une tuyère reliée à une première de ses extrémités à un manche.

### État de la technique

Les outils à main chauffants comprennent souvent une tuyère. Cette tuyère permet de conduire loin de la poignée le gaz de combustion nécessaire au chauffage. À l'intérieur de la tuyère, généralement en métal, est placé un brûleur qui permet d'enflammer le gaz de combustion. Le gaz enflammé sert à chauffer différents outils, comme des pannes à écornage ou de soudure.

Par exemple, le document WO 93/12377 décrit un outil à main chauffant. Cet outil à main chauffant sert à chauffer des pannes d'écornage ou de soudure. Il comprend une poignée, une tuyère s'étendant à partir de la poignée jusqu'à une sortie d'évacuation de gaz. À l'intérieur de la tuyère est logé un catalyseur de combustion tubulaire formant une chambre de combustion d'un gaz de combustion. L'outil à main comprend également un conduit qui relie la sortie d'évacuation de la tuyère à une deuxième sortie d'évacuation de gaz. Le conduit permet d'inverser le flux de gaz de manière à ce que celui-ci remonte le long de la tuyère pour chauffer celle-ci sur sa portion à l'intérieure de laquelle est logé le catalyseur de combustion. Cependant, en chauffant cette portion de la tuyère, une remontée de température peut se produire le long de celle-ci jusqu'à la poignée lors d'une utilisation prolongée. Il y a donc des risques de brûlure lors du contact avec la tuyère.

Les documents WO2010/059630 A2, WO 97/38265 et FR2628291 sont également pertinents par rapport à l'invention.

### Présentation de l'invention

Un but de l'invention est de palier au moins un des inconvénients présentés ci-dessus. En particulier, un but de l'invention est d'empêcher la tuyère de s'échauffer pendant le fonctionnement de l'outil à main chauffant pour diminuer les remontées de température.

Pour cela, l'invention propose une lance pour outil à main chauffant selon la revendication 1.

Ainsi, il n'y a pas de remontée de température le long de la tuyère, ou à tout le moins, la remontée de température est limitée. En effet seule la coupelle chauffe et non la tuyère.

D'autres caractéristiques optionnelles et non limitatives sont présentées ci-dessous.

La coupelle comprend en outre au moins un tamis, avantageusement un ou deux tamis, à l'intérieur du conduit pour supprimer une fausse flamme se formant en sortie de la tuyère évitant ainsi les risques de brûlure par des résidus de gaz brûlé et chaud.

La lance comprend en outre un élément à chauffer positionné au niveau de la deuxième extrémité de la tuyère. L'élément à chauffer constitue l'outil de travail de l'outil à main.

La coupelle est fixée à la deuxième extrémité de la tuyère et l'élément à chauffer est fixé à la coupelle. La coupelle joue ainsi le rôle d'un sas dans lequel le gaz est brûlé, ce qui chauffe l'élément à chauffer et par lequel le gaz chaud est ensuite évacué hors de la tuyère.

De préférence, l'élément à chauffer, avantageusement une panne à écornage, forme un outil réversible comportant un corps présentant au moins deux faces de travail.

Dans le cas de la panne à écornage, chacune des deux faces de travail de la panne à écornage comprend un logement concave pour la réception d'un cornillon, le logement concave ayant un bord extérieur circulaire correspondant à une extrémité de la panne à écornage, les diamètres des bords extérieurs circulaires des logements concaves étant différents.

De préférence, chaque face de travail présente au moins un trou traversant le corps et débouchant dans le logement concave correspondant, de manière à ce qu'en fonctionnement, le trou du logement concave utilisé pour écorner fait office de conduit d'évacuation de fumée formée au cours de l'écornage et le trou de l'autre logement concave fait office de logement pour moyens de fixation.

Dans le cas où l'élément à chauffer n'est pas une panne à écornage, celui-ci peut être une panne pour couvreur, une panne de fartage, un fer de marquage, une panne de fartage, une panne à laquer à chaud, un outil de poinçonnage à chaud ou un outil pour couper à chaud.

L'invention concerne également un outil à main comprenant un manche et une lance telle que décrite ci-dessus.

### Présentation des dessins

D'autres objectifs, caractéristiques et avantages sortiront de la description détaillée qui suit en référence aux dessins donnés à titre illustratif et non limitatif parmi lesquels :
- la figure 1 est une vue de côté d'un exemple de tuyère à connecter à un manche, une panne à écornage réversible étant fixée à l'extrémité de la tuyère, le tout formant une lance pour outil à main chauffant selon l'invention ;
- la figure 2 est une vue en coupe longitudinale de la tuyère de la figure 1 fixée à une panne à écornage réversible ;
- la figure 3 est une vue en coupe transversale de la tuyère de la figure 1 selon le plan **CC** ;
- la figure 4 est une vue en coupe transversale de la tuyère de la figure 1 selon le plan **BB** ;
- la figure 5 est une vue en trois-quarts de la tuyère de la figure 1, à laquelle est fixée une panne de couvreur ; et
- la figure 6 est une vue en trois-quarts de la tuyère de la figure 1, à laquelle est fixée un fer de marquage.

### Description détaillée

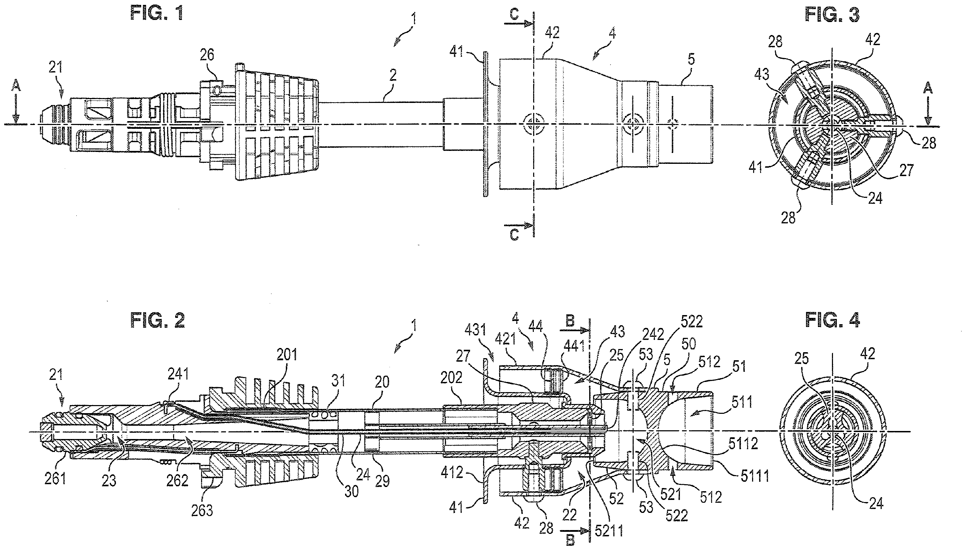

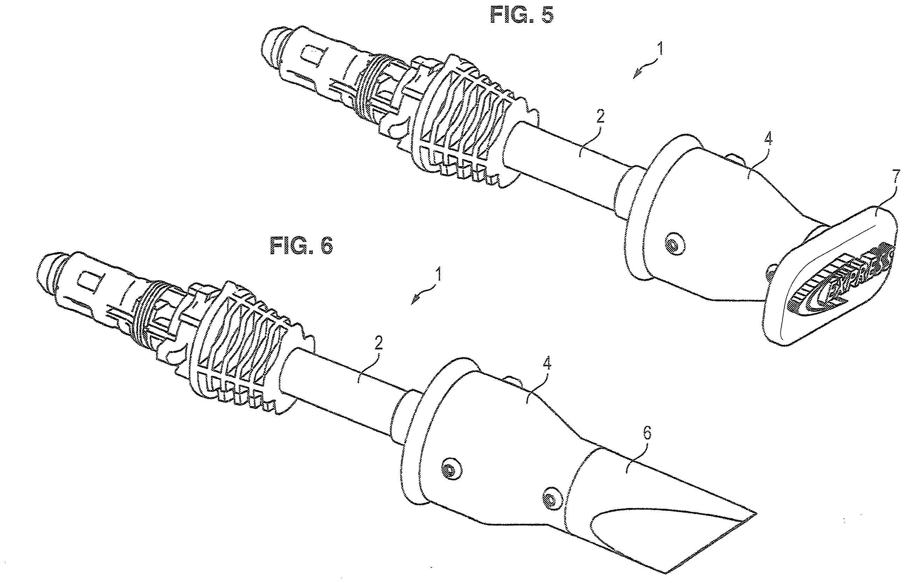

Un exemple de lance pour outil à main chauffant selon l'invention est décrit ci-après en référence aux figures 1 à 6.

La lance **1** comprend une tuyère **2.** La tuyère **2** est fixée à une première **21** de ses extrémités à un manche d'un outil à main de manière amovible ou inamovible.

La tuyère **2** est formée par un tube **20** s'étendant suivant un axe longitudinal **AA.** À l'une **201** des extrémités du tube **20** est monté un raccord **26** pour la fixation au manche. Le raccord **26** comprend en particulier une entrée **23** de combustible, par exemple du gaz de combustion, et un injecteur **261** permettant de régler la quantité de combustible introduit à l'intérieur du tube **20.** Le raccord **26** peut en outre comprendre un conduit tubulaire **262** s'étendant à partir de l'entrée **23** de combustible jusqu'à l'intérieur du tube **20.** Le diamètre intérieur du conduit tubulaire **262** augmente dans le sens partant de l'entrée **23** de combustible vers l'intérieur du tube **20** formant ainsi une partie divergent d'un venturi. Le raccord **26** comprend en outre des moyens **263** de mise en prise pour la fixation au manche. À l'autre extrémité **202** du tube est montée une buse **27.**

La tuyère **2** comprend également un fil conducteur **24** d'électricité pour l'amorce d'une étincelle. Le fil conducteur **24**, de préférence entouré d'un tube isolant en céramique **30**, s'étend, par exemple, le long de la tuyère **2**, c'est-à-dire à partir d'un point de contact **241** pour la connexion à une source électrique, à travers le conduit tubulaire **262**, le tube **20**, la buse **27**, jusqu'au point de formation d'une étincelle **242** au bout de la buse **27**, où le fil conducteur **24** forme une électrode. Le point de formation d'une étincelle est situé en dehors de la tuyère **2** et est formé par le fil conducteur **24** sortant par une deuxième extrémité **22** de la tuyère **2.** Au point de formation d'une étincelle, le fil conducteur **24** peut être courbé de manière à être sensiblement perpendiculaire à l'axe longitudinal **AA** du tube **20.** Le fil conducteur **24** est relié à une source électrique lorsque la tuyère est fixée au manche.

Une grille **25** est disposée à la deuxième extrémité **22** de la tuyère **2.** La grille **25** permet l'accrochage d'une flamme engendrée par la formation d'une étincelle au point de formation d'une étincelle, au bout du fil conducteur **24** et par le passage d'un gaz de combustion qui circule à travers la tuyère **2.** Le fil conducteur **24** s'étendant à travers cette grille **25** et hors de la tuyère **2.**

Ainsi, la flamme est générée en dehors de la tuyère **2**, ce qui permet de ne pas la chauffer.

La grille **25** possède, avantageusement une forme présentant une symétrie axiale permettant d'obtenir une flamme symétrique. Préférentiellement, la symétrie axiale est une symétrie axiale C₃, c'est-à-dire que l'image de la forme obtenue par une rotation de 2π/3 (soit 120°) autour de l'axe de symétrie est superposable à la forme de départ. Par exemple, la grille **25** est plate et le périmètre de sa forme est constitué d'une succession alternée d'arc de cercles tantôt concaves (au nombre de trois), tantôt convexes (au nombre de trois).

Afin de faciliter le centrage du fil conducteur **24** le long de la tuyère **2**, un anneau de centrage **29** est prévu à l'intérieur du tube **20** pour maintenir celui-ci par serrage. La tuyère **2** peut aussi comprendre un limiteur de prise d'air **31** pour limiter la quantité d'air entrant dans le tube **20.** Le limiteur de prise d'air **31**, avantageusement en caoutchouc, plastique ou métal, est annulaire et inséré à l'intérieur du tube **20** juste à la sortie du venturi formé par le conduit tubulaire **262.** Le diamètre intérieur du limiteur de prise d'air **31** est inférieur au diamètre intérieur du conduit tubulaire **262** au niveau de sa sortie. Ainsi, le limiteur de prise d'air **31** entrave une partie du flux de gaz.

La lance **1** comprend également une coupelle **4** d'évacuation de gaz brûlé positionnée au niveau de la deuxième extrémité **22** de la tuyère **2** grâce, par exemple, à des moyens de fixation **28** par vis à la buse **27.** De manière avantageuse, la coupelle **4** peut être fixée à l'aide de trois vis disposées autour de l'axe longitudinal **AA** suivant une symétrie axiale C₃ (voir la figure 3). La coupelle **4** d'évacuation dirige le gaz brûlé par la flamme de manière à ce que celui-ci demeure hors de contact avec la tuyère **2** réalisant ainsi une isolation de la tuyère vis-à-vis du gaz brûlé chaud.

Ainsi, un chauffage de la tuyère **2** par ce gaz brûlé est évité.

Dans un mode de réalisation particulier de la coupelle **4**, celle-ci présente deux pièces distinctes_; elle comporte un élément annulaire inférieur **41** et un élément annulaire supérieur **42.** Les éléments annulaires inférieur **41** et supérieur **42** sont coaxiaux et forment un conduit **43** se terminant par un orifice annulaire **431** pour orienter le gaz brûlé dans une direction sensiblement perpendiculaire à l'axe longitudinal **AA** de la tuyère **2.**

L'élément annulaire inférieur **41** comprend une première portion cylindrique **411** s'étendant autour de la tuyère **2** sans toutefois être en contact avec celle-ci jusqu'à l'orifice annulaire **431** où elle se prolonge par une deuxième portion **412** qui diverge de la tuyère **2** suivant un angle sensiblement perpendiculaire à cette dernière. La portion de transition entre la première portion cylindrique **411** et la deuxième portion étant courbe de manière à permettre une redirection du flux de gaz brûlé sans trop de turbulence à l'intérieur du conduit **43.**

L'élément annulaire supérieur **42** comprend une portion cylindrique **421** s'étendant autour de l'élément annulaire inférieur **41** et couvre celui-ci sur une majeure partie, s'arrêtant au niveau de l'orifice annulaire **431.** Une telle réalisation des éléments annulaires inférieur **41** et extérieur **42** garantit la compacité de la lance **1** et par conséquent de l'outil à main sur lequel est assemblée la lance.

La coupelle **4** peut comprendre en outre un tamis **44** annulaire à l'intérieur du conduit **43** pour confiner une fausse flamme pouvant se former en sortie de la tuyère **2.** La fausse flamme est due à du gaz qui arrive à cet endroit de la coupelle **4** n'a pas encore totalement brûlé.

La coupelle **4** peut comprendre un deuxième tamis **441** annulaire à l'intérieur du conduit **43** ayant la même fonction que le tamis **44.** La combinaison des deux tamis **44**, **441** permet une accroche améliorée de la fausse flamme.

La lance 1 peut comprendre un élément à chauffer **5**, **6**, **7** positionné au niveau de la deuxième extrémité **22** de la tuyère **2.** Cet élément à chauffer **5**, **6**, **7** peut être une panne **5** à écornage, une panne **6** pour couvreur, un fer **7** à marquage, une panne de fartage, une panne à laquer à chaud, un outil de poinçonnage à chaud, un outil pour couper à chaud (un coupe nylon par exemple) etc.

L'élément à chauffer **5**, **6**, **7** peut être fixé sur l'élément annulaire supérieur **42** de la coupelle **4** de manière à être aligné sur l'axe longitudinal **AA** de la tuyère **2** par des moyens de fixation, par exemple des vis **53.**

De manière avantageuse, l'élément à chauffer **5** forme un outil réversible comportant un corps **50** présentant au moins deux faces de travail **51**, **52.**

Ces deux faces de travail **51**, **52** peuvent être identiques. Dans ce cas, ceci a pour avantage que l'utilisateur n'a pas besoin d'emporter avec lui deux outils dont un seul est fixé à la lance et l'autre devant être porté par l'utilisateur. La face de travail **51**, **52** non utilisée sert de face de travail de rechange quand l'autre vient à être trop abîmée ou usée.

Les deux faces de travail **51**, **52** sont, de manière encore plus avantageuse, différentes. Ainsi, l'utilisateur n'a pas besoin d'emporter sur lui deux outils différents, dont un seul est fixé à la lance et l'autre devant être porté.

Par exemple, dans le cas d'une panne **5** d'écornage, chacune des deux faces de travail **51**, **52** peut comprendre un logement concave **511**, **521** pour la réception d'un cornillon. Le logement concave **511**, **521** possède un bord extérieur circulaire **5111**, **5211** correspondant à une extrémité de la panne **5** à écornage. Les diamètres des bords extérieurs circulaires **5111**, **5211** des logements concaves **511**, **521** peuvent être différents. Ainsi, l'utilisateur pourra choisir selon la taille du cornillon, la taille du logement concave approprié pour écorner l'animal.

Toujours dans le cas d'une panne **5** d'écornage, chaque face de travail **51**, **52** peut présenter au moins un trou **512**, **522** traversant le corps **50** et débouchant dans le logement concave **511**, **521** correspondant, de manière à ce qu'en fonctionnement, le trou **512**, **522** du logement concave **511**, **521** utilisé pour écorner fait office de conduit d'évacuation de fumée formée au cours de l'écornage et le trou **522**, **512** de l'autre logement concave **521**, **511** fait office de logement pour moyens de fixation **53.** Ainsi, le nombre de trous peut être limité au strict minimum. Le trou **512**, **522** peut être taraudé afin de permettre la fixation par vis **53.**

De manière générale, la disposition du point de formation d'une étincelle **242** est disposée de manière à ce que la distance du lieu où la flamme s'accroche (la grille **25**) à un point de travail de l'élément à chauffer **5**, **6**, **7** (le fond **5112**, **5212** du logement concave **511**, **521** utilisé) soit réduite. Le fait de positionner ce point de formation d'étincelle **242** à l'extérieur de la tuyère **2** permet de réduire la distance à environ la taille du diamètre du bord extérieur circulaire **5111**, **5211** du logement concave **511**, **521** le plus grand, soit le ratio de la distance sur le diamètre compris entre 0,65 et 1,10.

La lance **1** peut être assemblée sur un élément de préhension (manche) pour former un outil à main.

## Revendications

1. Lance (1) pour outil à main chauffant, comprenant :
- une tuyère (2) pouvant être reliée au niveau d'une première de ses extrémités (21) à un manche de l'outil à main, la tuyère (2) comportant une entrée (23) de gaz de combustible et un fil conducteur (24) formant électrode pour l'amorce d'une étincelle;
- une grille (25) disposée à une deuxième extrémité (22) de la tuyère (2) pour l'accrochage d'une flamme s'allumant à l'amorce de l'étincelle dans un flux de gaz combustible, le fil conducteur (24) s'étendant à travers cette grille (25) et hors de la tuyère (2) ; et
- une coupelle (4) d'évacuation de gaz brûlé positionnée au niveau de la deuxième extrémité (22), la coupelle (4) d'évacuation dirigeant le gaz brûlé et chaud de manière à ce que celui-ci demeure hors de contact avec la tuyère (2),
**caractérisée en ce que** la tuyère (2) s'étend entre la première extrémité (21) et la deuxième extrémité (22) suivant un axe longitudinal (AA), et dans lequel la coupelle (4) comporte un élément annulaire inférieur (41) et un élément annulaire supérieur (42), les éléments annulaires inférieur (41) et supérieur (42) étant coaxiaux et forment un conduit (43) pour orienter l'air chaud dans une direction sensiblement perpendiculaire à l'axe longitudinal (AA).

2. Lance (1) selon la revendication 1, dans laquelle la coupelle (4) comprend en outre au moins un tamis (44, 441) à l'intérieur du conduit (43) pour supprimer une fausse flamme se formant en sortie de la tuyère (2).

3. Lance (1) selon la revendication 1 ou la revendication 2, comprenant en outre un élément à chauffer (5, 6, 7) positionné au niveau de la deuxième extrémité (22) de la tuyère (2).

4. Lance (1) selon la revendication 3, dans laquelle la coupelle (4) est fixée à la deuxième extrémité (22) de la tuyère (2) et l'élément à chauffer (5, 6, 7) est fixé à la coupelle (4).

5. Lance (1) selon la revendication 3 ou 4, dans laquelle l'élément à chauffer (5, 6, 7) forme un outil réversible comportant un corps présentant au moins deux faces de travail (51, 52).

6. Lance (1) selon la revendication 5, dans laquelle l'élément à chauffer est une panne à écornage (5).

7. Lance (1) selon la revendication 6, dans laquelle chacune des deux faces de travail (51, 52) de la panne à écornage (5) comprend un logement concave (511, 521) pour la réception d'un cornillon, le logement concave (511, 521) ayant un bord extérieur (5111, 5211) circulaire correspondant à une extrémité de la panne à écornage (5), les diamètres des bords extérieurs (5111, 5211) circulaires des logements concaves (511, 521) étant différents.

8. Lance (1) selon la revendication 7, dans laquelle chaque face de travail (51, 52) présente au moins un trou (512, 522) traversant le corps et débouchant dans le logement concave (511, 521) correspondant, de manière à ce qu'en fonctionnement, le trou (512, 522) du logement concave (511, 521) utilisé pour écorner fait office de conduit d'évacuation de fumée formée au cours de l'écornage et le trou (522, 512) de l'autre logement concave (521, 511) fait office de logement pour moyens de fixation (53).

9. Lance (1) selon la revendication 5, dans laquelle l'élément à chauffer est une panne (6) pour couvreur, une panne de fartage, un fer (7) de marquage, une panne de fartage, une panne à laquer à chaud, un outil de poinçonnage à chaud ou un outil pour couper à chaud.

10. Outil à main chauffant comprenant un manche, **caractérisé en ce qu'**il comprend une lance (1) selon l'une des revendications 1 à 9.

## Patentansprüche

1. Lanze (1) für beheizbares Handwerkzeug, umfassend:
- eine Düse (2), die an einem ersten ihrer Enden (21) mit einem Griff des Handwerkzeugs verbunden werden kann, wobei die Düse (2) einen Einlass für gasförmigen Brennstoff (23) und einen Leitdraht (24) aufweist, der eine Elektrode zum Zünden eines Funkens bildet;
- einen Rost (25), der an einem zweiten Ende (22) der Düse (2) angeordnet ist, um eine Flamme zu halten, die sich beim Zünden des Funkens in einen Strom brennbaren Gases entzündet, wobei sich der Leitdraht (24) durch diesen Rost (25) und aus der Düse (2) heraus erstreckt; und
- einen am zweiten Ende (22) angeordneten Abgasableitbecher (4), wobei der Abgasbecher (4) das heiße Abgas so lenkt, dass es nicht mit der Düse (2) in Kontakt gelangt,
**dadurch gekennzeichnet, dass** sich die Düse (2) zwischen dem ersten Ende (21) und dem zweiten Ende (22) entlang einer Längsachse (AA) erstreckt, und wobei der Becher (4) ein unteres ringförmiges Element (41) und ein oberes ringförmiges Element (42) umfasst, wobei das untere (41) und das obere (42) ringförmige Element koaxial sind und einen Kanal (43) zum Leiten der Heißluft in eine Richtung im Wesentlichen senkrecht zur Längsachse (AA) bilden.

2. Lanze (1) nach Anspruch 1, wobei der Becher (4) ferner mindestens ein Sieb (44, 441) im Innern des Kanals (43) zum Unterdrücken einer sich am Ausgang der Düse (2) bildenden falschen Flamme aufweist.

3. Lanze (1) nach Anspruch 1 oder Anspruch 2, die ferner ein Heizelement (5, 6, 7) umfasst, das am zweiten Ende (22) der Düse (2) angeordnet ist.

4. Lanze (1) nach Anspruch 3, wobei der Becher (4) am zweiten Ende (22) der Düse (2) befestigt ist und das zu beheizende Element (5, 6, 7) am Becher (4) befestigt ist.

5. Lanze (1) nach einem beliebigen der vorstehenden Ansprüche 3 oder 4, wobei das zu beheizende Element (5, 6, 7) ein umkehrbares Werkzeug bildet, das einen Körper mit mindestens zwei Arbeitsflächen (51, 52) aufweist.

6. Lanze (1) nach Anspruch 5, wobei das zu beheizende Element ein Enthornungsgerät (5) ist.

7. Lanze (1) nach Anspruch 6, wobei jede der beiden Arbeitsflächen (51, 52) des Enthornungsgeräts (5) ein konkaves Gehäuse (511, 521) für die Aufnahme einer Hornanlage aufweist, wobei das konkave Gehäuse (511, 521) einen äußeren kreisförmigen Rand (5111, 5211) aufweist, der einem Ende des Enthornungsgeräts (5) entspricht, wobei die Durchmesser der äußeren kreisförmigen Ränder (5111, 5211) der konkaven Gehäuse (511, 521) unterschiedlich sind.

8. Lanze (1) nach Anspruch 7, wobei jede Arbeitsfläche (51, 52) zumindest ein Loch (512, 522) aufweist, das durch den Körper hindurchgeht und in das entsprechende konkave Gehäuse (511, 521) mündet, so dass beim Betrieb das Loch (512, 522) des zum Enthornen verwendeten konkaven Gehäuses (511, 521) als Abzugskanal für den beim Enthornen entstehenden Rauch dient und das Loch (522, 512) des anderen konkaven Gehäuses (521, 511) als Gehäuse für Befestigungsmittel (53) dient.

9. Lanze (1) nach Anspruch 5, wobei das zu beheizende Element eine Pfette (6) für Dachdecker, eine Wachspfette, ein Markierungseisen (7), eine Wachspfette, eine Heißlackpfette, ein Heißstanzwerkzeug oder ein Heißschneidwerkzeug ist.

10. Beheizbares Handwerkzeug umfassend einen Handgriff, **dadurch gekennzeichnet, dass** es eine Lanze (1) nach einem beliebigen der vorstehenden Ansprüche 1 bis 9 umfasst.

## Claims

1. A lance (1) for a hand-held heating tool, comprising:
- a nozzle (2) which can be connected at a first of its ends (21) to a handle of the hand-held tool, the nozzle (2) including a combustible gas inlet (23) and a conductive wire (24) forming an electrode for an igniting spark;
- a grate (25) disposed at a second end (22) of the nozzle (2) for holding a flame lit by the igniting spark in a flow of combustible gas, the conductive wire (24) extending through this grate (25) and out of the nozzle (2); and
- a shroud (4) for exhausting burnt gas positioned at the second end (22), the exhaust shroud (4) directing the burnt and hot gas so that it remains out of contact with the nozzle (2),
**characterized in that** the nozzle (2) extends between the first end (21) and the second end (22) along a longitudinal axis (AA), and wherein the shroud (4) includes a lower annular element (41) and an upper annular element (42), the lower (41) and upper (42) annular elements being coaxial and form a duct (43) for orienting the hot air in a direction substantially perpendicular to the longitudinal axis (AA).

2. The lance (1) according to claim 1, wherein the shroud (4) also comprises at least one sieve (44, 441) inside the duct (43) to suppress a false flame forming at the outlet of the nozzle (2).

3. The lance (1) according to claim 1 or claim 2, also comprising an element to be heated (5, 6, 7) positioned at the second end (22) of the nozzle (2).

4. The lance (1) according to claim 3, wherein the shroud (4) is attached to the second end (22) of the duct (2) and the element to be heated (5, 6, 7) is fixed to the shroud (4).

5. The lance (1) according to claim 3 or 4, wherein the element to be heated (5, 6, 7) forms a reversible tools including a body having at least two working faces (51, 52).

6. The lance (1) according to claim 5, wherein the element to be heated is a dehorning bit (5).

7. The lance (1) according to claim 6, wherein each of the two working faces (51, 52) of the dehorning bit (5) comprises a concave housing (511,521) for receiving a horn-core, the concave housing (511,521) having a circular exterior edge (5111, 5211) corresponding to one end of the dehorning bit (5), the diameters of the circular exterior edges (5111, 5211) of the concave housings (511, 521) being different.

8. The lance (1) according to claim 7, wherein each working face (51, 52) has at least one hole (512, 522) passing through the body and leading to the corresponding concave housing (511, 521), so that during operation, the hole (512, 522) of the concave housing (511, 521) used for dehorning, serves as an exhaust duct for smoke formed during dehorning and the hole (522, 512) of the other concave housing (521, 511) serves as a housing for the attaching means (53).

9. The lance (1) according to claim 5, wherein the element to be heated is a roofer's bit (6), a waxing bit, a branding iron (7), a waxing bit, a hot-lacquering bit, a hot-stamping tool, a hot-cutting tool.

10. A hand-held heating tool comprising a handle, **characterized in that** it comprises a lance (1) according to one of claims 1 to 9.
